# FASCICULE DE BREVET EUROPEEN

(11) **EP 0 759 369 B1**
(45) Date de publication et mention de la délivrance du brevet: **05.04.2000**
(21) Numéro de dépôt: 96401741.2
(22) Date de dépôt: 07.08.1996
(51) Int. Cl.: B60J 1/00

(54) **Procédé de fabrication d'un vitrage ayant les dimensions requises et vitrage obtenu**
Verfahren zur Herstellung einer Verglasung und nach diesem Verfahren hergestellte Verglasung
Construction process for glazing with required dimensions and glazing made by this process

(30) Priorité: 17.08.1995 FR 9509871
(43) Date de publication de la demande: 26.02.1997
(73) Titulaire: SAINT-GOBAIN VITRAGE, 92400 Courbevoie (FR)
(72) Inventeur: de Paoli, Martial, 60400 Cuts (FR); Huchet, Gérard, 02600 Retheuil (FR)
(74) Mandataire: Muller, René

(56) Documents cités:
- EP-A- 0 323 048
- PATENT ABSTRACTS OF JAPAN vol. 13, no. 340 (M-857) [3688] , 9 Mai 1989 & JP-A-01 115723 (MITSUBISHI), 31 Juillet 1989,
- 4514- AUTOMOTIVE ENGINEER, vol. 8, no. 4, Août 1983 - Septembre 1983, GB, page 71 XP002000800

## Description

L'invention concerne le procédé de fabrication d'un vitrage en verre et/ou en matière plastique muni d'une cale et ayant les dimensions requises et notamment le procédé de fabrication d'un vitrage feuilleté. L'invention concerne également le vitrage ainsi obtenu.

On appelle vitrage dans la suite de la description une feuille en verre et/ou en matière plastique ou un assemblage de feuilles en verre et/ou en matière plastique, généralement essentiellement transparente(s). Cette ou ces feuille(s) peuvent être éventuellement munie(s) d'accessoires tels qu'une matière plastique surmoulant cette ou ces feuille(s), des éléments fonctionnels, par exemple des éléments de fixation, de guidage, etc..., ou tout autre accessoire. Ce vitrage peut-être monolithique, c'est-à-dire constitué d'une feuille en verre ou en matière plastique ; il peut être également feuilleté, c'est-à-dire constitué d'un assemblage de feuilles en verre et/ou en matière plastique. Cet assemblage peut être symétrique (les deux feuilles extérieures sont de même nature, par exemple en verre ou en matière plastique) ou asymétrique (les deux feuilles extérieures sont de nature différentes, par exemple en verre et en matière plastique).

Quoiqu'il en soit, le vitrage doit posséder des dimensions précises correspondant aux dimensions requises pour son montage dans une baie. Il peut s'agir d'une baie dans un véhicule de transport (voiture, camion, camionnette, train, avion, etc...), ou d'une baie dans un bâtiment. A titre indicatif, l'écart toléré entre les dimensions du vitrage et les dimensions requises pour son montage dans une baie est de l'ordre de 0,2 mm. Or, lors de la fabrication d'un vitrage, et notamment d'un vitrage feuilleté, il peut s'avérer que les dimensions finales du vitrage ne soient pas celles désirées, l'écart pouvant atteindre l'ordre du centimètre. Ces vitrages peuvent alors soit être mis au rebut soit être repris en atelier, ce qui est dans tous les cas relativement coûteux.

L'invention a pour but de procurer un vitrage prêt à être monté et notamment un vitrage feuilleté possédant les dimensions désirées et dont la fabrication soit simple et peu onéreuse.

L'invention concerne le procédé de fabrication d'un vitrage en verre et/ou en matière plastique muni d'une cale et ayant les dimensions requises pour un montage dans une baie donnée. Ce procédé comprend notamment les étapes suivantes :
- ajout d'au moins une cale sur le vitrage, la position de la cale étant réglée de telle sorte que la dimension du vitrage prolongée par cette cale soit sensiblement égale à la dimension requise du vitrage pour un montage dans ladite baie,
- fixation de ladite cale au vitrage.

La forme de la cale est telle qu'elle prolonge en quelque sorte le vitrage de la dimension manquante. On comprend par dimension la hauteur, longueur du vitrage, si il a une forme globalement parallélépipédique. La cale peut prolonger une ou plusieurs dimensions selon l'utilisation envisagée. On peut, avec un seul modèle de cale, compenser des écarts variés entre les dimensions du vitrage et celles de la baie dans laquelle il va être monté. Ces écarts peuvent par exemple être compris entre 0,3 et 5 centimètres. La cale comprend de préférence une cavité à l'intérieur de laquelle vient s'insérer un bord du vitrage, un espace, de dimension(s) réglable(s), étant laissé entre le fond de cette cavité et le bord du vitrage. On règle la position de la cale de telle sorte que la dimension de l'espace laissé libre entre le fond de cette cavité et le bord du vitrage, augmentée de l'épaisseur de ce fond, soit égale à la dimension manquante du vitrage. Le réglage de la position de la cale est obtenu de préférence à l'aide d'un gabarit du type pied à coulisse.

La cale est ensuite fixée au vitrage par tout moyen de fixation, par exemple par un matériau adhésif. Selon un mode préféré de l'invention, l'espace laissé entre le fond de la cavité et le bord du vitrage est au moins partiellement comblé par un matériau. Il s'agit, de préférence, d'un matériau possédant des propriétés adhésives vis-à-vis du vitrage et de la cale. Il est avantageusement durcissable : il est fluide lors de son application pour combler au moins partiellement ledit espace puis durcit, solidarisant la cale au vitrage. Il s'agit, par exemple, d'un matériau du type colle thermofusible.

Le matériau constituant la cale est un matériau indéformable. Il est suffisamment rigide pour supporter le poids du vitrage seul et du vitrage monté dans la baie sans toutefois risquer de le briser, notamment lorsque le vitrage comporte une matière fragile telle que du verre. Ce matériau est du type polyamide.

Les dimensions et le nombre de cales sont fonction de l'application envisagée. Leur nombre est, par exemple, d'au moins deux, de préférence égal à deux, positionnées, par exemple, à chaque extrémité d'un bord, par exemple le bord inférieur. Leur largeur est fonction de l'épaisseur du vitrage. Elle est par exemple comprise entre 30 et 40 mm pour un vitrage feuilleté comportant deux feuilles de verre et une feuille en matière plastique.

L'invention concerne également le vitrage en verre et/ou en matière plastique ayant les dimensions requises pour un montage dans une baie, ce vitrage étant muni d'au moins une cale, dont la position vis-à-vis du vitrage est réglée de manière à ce que la dimension du vitrage prolongée par cette cale soit égale à la dimension requise. Le vitrage, possédant les bonnes dimensions, est ainsi prêt à la monte. En outre, la ou les cale(s) fixée(s) au vitrage le protège(nt) lors de sa manutention, son transport et peut (peuvent) également absorber les éventuelles vibrations lors de son utilisation. La cale est, de préférence, montée en périphérie du vitrage.

D'autres caractéristiques et avantages de l'invention apparaîtront dans la suite de la description dans laquelle :
- la figure 1 représente une vue de face, schématisée, d'un vitrage selon l'invention,
- la figure 2 comporte quatre schémas, en coupe d'un vitrage muni d'une cale selon l'invention,
- la figure 3 représente un schéma illustrant une méthode pour positionner la cale à l'endroit désiré,
- la figure 4 représente le vitrage schématisé sur le schéma 2d monté dans une baie.

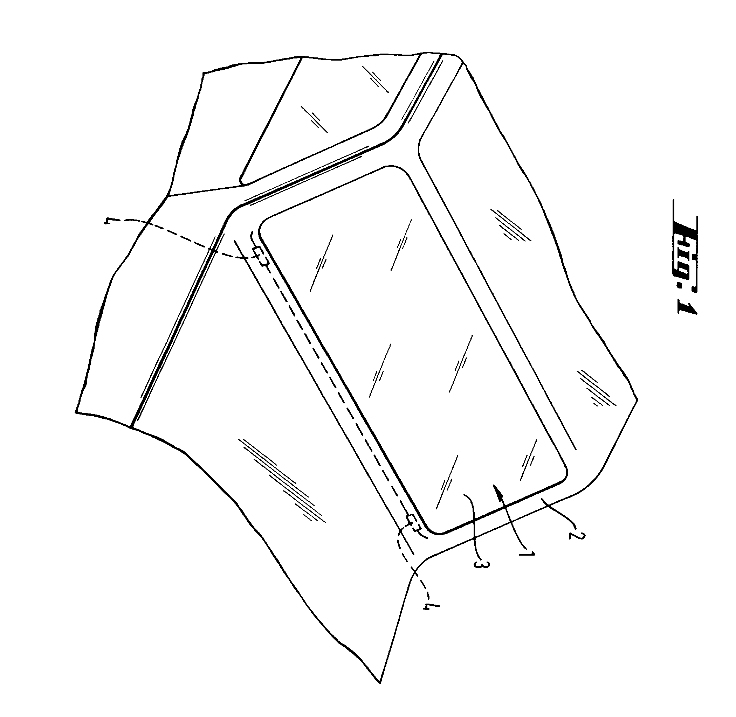

La figure 1 représente une vue de face d'un vitrage 1 monté dans une baie 2 d'un véhicule de transport. Ce vitrage comporte au moins une feuille 3 en verre et/ou en matière plastique, transparente, et deux cales 4 selon l'invention. Ces cales sont représentées montées en périphérie du vitrage, sur sa partie basse. Elles sont, de préférence, non visibles de l'extérieur, par exemple cachées par, notamment, une boîte à eau, non représentée.

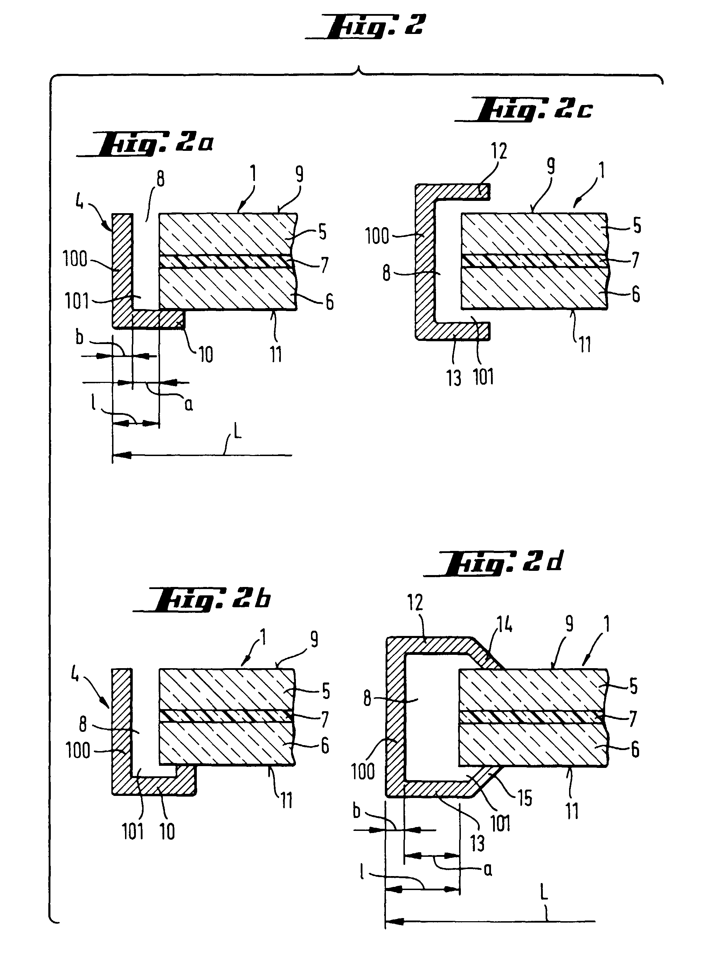

La figure 2 comporte quatre schémas en coupe de vitrages, 1, munis d'une cale, 4, selon l'invention. Ces vitrages sont des vitrages feuilletés comportant deux feuilles en verre 5 et 6, entre lesquelles est intercalée une feuille en matière plastique 7, par exemple en polyvinyle butyral. Un espace 8 est laissé entre l'aile 100 constituant le fond d'une cavité 101 et le vitrage 1. Cet espace permet de régler la dimension I afin d'obtenir une dimension finale, L, du vitrage muni de la cale, sensiblement constante correspondant à la dimension requise. Il s'agit, par exemple de la dimension correspondante de la baie 2 dans laquelle va être monté le vitrage. La longueur l est égale à la dimension a de l'espace 8 additionnée de la dimension b de la cale correspondant à l'épaisseur de l'aile 100 formant le fond de la cavité 101. Afin de compenser un grand nombre d'écart dimensionnel entre le vitrage et sa baie avec un même modèle de cale, on choisit en général une dimension b, relativement faible, par exemple comprise entre 0,1 et 0,6 mm. Sur ces schémas le profil de la cale 4, forme une cavité 101 délimitant au moins partiellement l'espace 8. Cette cavité est fermée par un côté par le vitrage 1. la cale peut posséder différentes formes selon l'application envisagée. Elle peut affleurer à la surface 9 du vitrage comme illustré sur les schémas 2a ou 2b. Elle possède, alors par exemple, une forme en L ou en U comme représenté sur les schémas 2a ou 2b, une partie de l'aile 10 chevauchant la face 11 du vitrage. Elle peut également posséder une forme en U comme illustré sur les schémas 2c et 2d dont une partie des ailes 12 et 13 chevauchent respectivement les faces 9 et 11 du vitrage. Le U peut être en quelque sorte fermé par deux ailes 14 et 15, comme représenté sur le schéma 2d, fermant entièrement l'espace 8. La longueur des ailes 10, 12, 13 est choisie de telle sorte qu'elle soit supérieure à l'écart supposé maximal entre les dimensions du vitrage et ses dimensions requises de telle sorte qu'on utilise un même modèle de cale pour compenser plusieurs dimensions manquantes du vitrage.

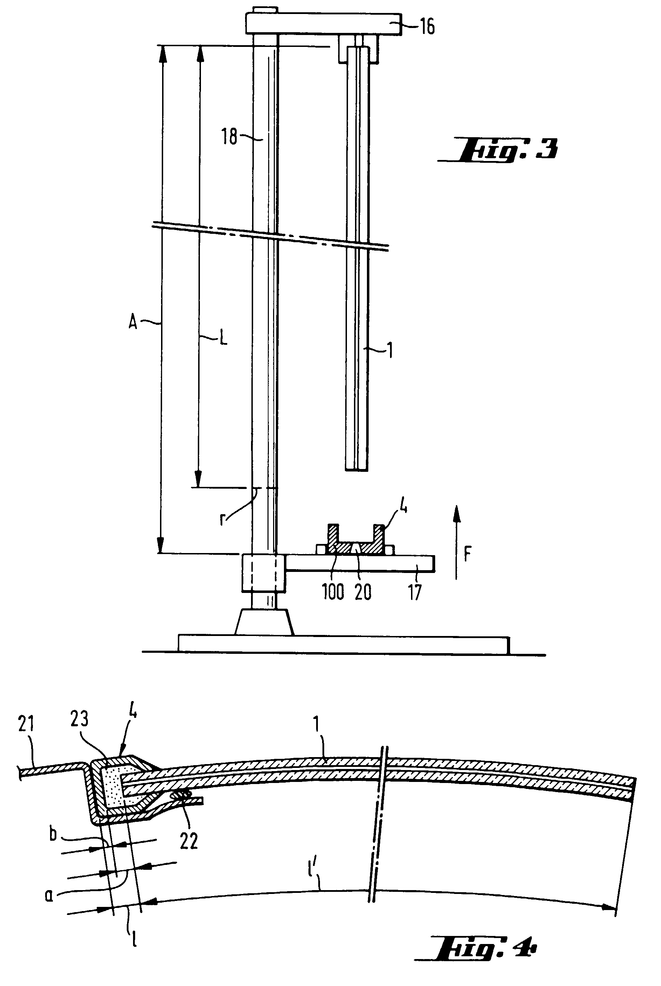

La figure 3 illustre un procédé pour positionner la cale schématisée sur le schéma 2c à son emplacement désiré. On utilise un gabarit du type pied à coulisse possédant un bec fixe 16 contre lequel le vitrage 1 est mis en butée et un bec mobile 17. Ces becs sont montés le long d'une réglette 18, graduée. La cale, 4, est, par exemple, positionnée dans le prolongement du vitrage 1 dans le sens de sa dimension manquante, de telle sorte que la dimension A entre les deux becs soit supérieure à la dimension finale L désirée du vitrage muni de sa cale. Le bec mobile, 17, est alors poussé vers le vitrage, selon la flèche F jusqu'au repère r correspondant à la longueur L désirée. Le bec, lors de ce mouvement, se met en butée contre l'aile 100 de la cale et pousse ladite cale jusqu'au repère.

On fixe alors la cale dans cette position au vitrage. On peut par exemple injecter une matière plastique durcissable par un orifice d'injection 20 fixant ainsi la cale 4 au vitrage 1 dans la position voulue.

La gravité est opportunément mise à profit en inversant la position du gabarit dans la direction verticale, par rapport à la position représentée sur la figure 3. Le vitrage 1 repose alors, bien entendu, sur le bec fixe 16, tout en étant maintenu latéralement, le cas échéant, par tout moyen approprié. Un tel positionnement du gabarit sera, en réalité, le plus souvent employé.

La figure 4 illustre le vitrage muni de la cale schématisée sur le schéma 2d monté dans une baie délimitée par un cadre 21. Le vitrage est représenté fixé au cadre de la baie par un cordon de colle 22. La dimension du vitrage, l', est augmentée de la dimension I telle que l + l' = L, L étant la dimension requise du vitrage l' étant elle-même la somme de a et b (l' = a + b), a étant une dimension de l'espace 8 et b l'épaisseur de l'aile 100 de la cale 4. Cet espace 8 est rempli d'un matériau 23 qui, en même temps, fixe la cale sur le vitrage. Après durcissement du matériau 23, la cale est solidarisée au vitrage, dans la position voulue, pour que ledit vitrage ait la hauteur ou longueur voulue.

Les cales sont disposées, de préférence, en partie basse du vitrage dans les zones où il doit être en appui dans la feuillure de la baie.

## Revendications

1. Procédé de fabrication d'un vitrage (1) en verre et/ou en matière plastique muni d'une cale (4) et ayant les dimensions requises pour un montage dans une baie (2) donnée, **caractérisé en ce qu**'il comprend notamment les étapes suivantes :
• ajout d'au moins une cale (4) sur le vitrage (1), la position de la cale (4) étant réglée de telle sorte que la dimension du vitrage (1) prolongée par cette cale (4) soit sensiblement égale à la dimension requise du vitrage pour un montage dans ladite baie (2),
• fixation de ladite cale (4) au vitrage (1) dans la position où elle a été réglée.

2. Procédé selon la revendication 1, **caractérisé en ce que** la cale (4) comprend une cavité (101) à l'intérieur de laquelle vient s'insérer le bord du vitrage (1), un espace (8), de dimension(s) réglable(s), étant laissé entre le fond de cette cavité (101) et le bord du vitrage (1).

3. Procédé selon la revendication 1 ou 2, **caractérisé en ce que** le réglage de la position de la cale (4) est obtenu à l'aide d'un gabarit (16,17,18), du type pied à coulisse.

4. Procédé selon l'une des revendications précédentes, **caractérisé en ce que** la fixation de la cale (4) au vitrage (1) est obtenue à l'aide d'un matériau adhésif (23).

5. Procédé selon la revendication 4, **caractérisé en ce que** la fixation de la cale (4) est obtenue en comblant au moins partiellement l'espace (8) laissé libre entre le fond de la cavité (101) de la cale (4) et le bord du vitrage (1).

6. Procédé selon la revendication 5, **caractérisé en ce que** ce matériau (23) est du type colle thermofusible.

7. Vitrage (1) en verre et/ou en matière plastique muni d'une cale (4) et ayant les dimensions requises pour un montage dans une baie (2), caractérisé en ce que ce vitrage (1) est muni d'au moins une cale (4) dont la position vis-à-vis du vitrage (1) est réglée de telle sorte que la dimension du vitrage (1) prolongée par cette cale (4) soit sensiblement égale à la dimension requise.

8. Vitrage (1) muni d'une cale (4) selon la revendication 7, **caractérisé en ce que** cette cale (4) montée en périphérie du vitrage (1) globalement en forme de U ou de L comprend une cavité (101) à l'intérieur de laquelle est inséré un bord du vitrage (1), un espace (8) étant laissé entre le bord du vitrage (1) et le fond de cette cavité (101).

9. Vitrage (1) muni d'une cale (4) selon la revendication 8, **c aractérisé en ce que** cet espace (8) est comblé par un matériau (23) qui bloque la cale (4) en position voulue sur le vitrage (1).

10. Vitrage (1) muni d'une cale (4) selon l'une des revendications 7 à 9, **caractérisé en ce que** le matériau (23) constituant la cale (4) est du type polyamide.

11. Vitrage (1) muni d'une cale (4) selon l'une des revendications 7 à 10, **caractérisé en ce que** le matériau (23) qui comble l'espace (8) entre le bord du vitrage (1) et le fond de la cale (4) est un matériau durcissable du type colle thermofusible.

## Patentansprüche

1. Verfahren zur Herstellung einer Verglasung (1) aus Glas und/oder Kunststoff, welche mit einer Zwischenlage (4) versehen ist und die für einen Einbau in eine vorgegebene Öffnung (2) erforderlichen Abmessungen besitzt, **dadurch gekennzeichnet, daß** es insbesondere folgende Stufen umfaßt:
• Hinzufügen mindestens einer Zwischenlage (4) zur Verglasung (1), wobei die Position der Zwischenlage (4) derart eingestellt wird, daß die Abmessung der Verglasung (1), welche von dieser Zwischenlage (4) verlängert wird, im wesentlichen gleich der für einen Einbau in die Öffnung (2) erforderlichen Abmessung der Verglasung ist, und
• Befestigung der Zwischenlage (4) an der Verglasung (1) in der Position, in welcher sie eingestellt worden ist.

2. Verfahren nach Anspruch 1, **dadurch gekennzeichnet, daß** die Zwischenlage (4) einen Hohlraum (101) enthält, in dessen Innerem der Rand der Verglasung (1) eingefügt wird, wobei zwischen dem Boden des Hohlraums (101) und dem Rand der Verglasung (1) ein Zwischenraum (8) mit einstellbarer (einstellbaren) Abmessung(en) frei gelassen wird.

3. Verfahren nach Anspruch 1 oder 2, **dadurch gekennzeichnet, daß** die Einstellung der Position der Zwischenlage (4) mit Hilfe eines Meßmittels (16, 17, 18) wie eines Meßschiebers erfolgt.

4. Verfahren nach einem der vorhergehenden Ansprüche, **dadurch gekennzeichnet, daß** die Befestigung der Zwischenlage (4) an der Verglasung (1) mittels eines Haftmaterials (23) erhalten wird.

5. Verfahren nach Anspruch 4, **dadurch gekennzeichnet, daß** die Befestigung der Zwischenlage (4) erhalten wird, indem der Zwischenraum (8), welcher zwischen dem Boden des Hohlraums (101) der Zwischenlage (4) und dem Rand der Verglasung (1) frei gelassen worden ist, wenigstens teilweise ausgefüllt wird.

6. Verfahren nach Anspruch 5, **dadurch gekennzeichnet, daß** das Material (23) ein Schmelzklebstoff ist.

7. Verglasung (1) aus Glas und/oder Kunststoff, welche mit einer Zwischenlage (4) versehen ist und die für einen Einbau in eine Öffnung (2) erforderlichen Abmessungen besitzt, **dadurch gekennzeichnet, daß** die Verglasung (1) mit mindestens einer Zwischenlage (4) ausgestattet ist, deren Position gegenüber der Verglasung (1) derart eingestellt wird, daß die Abmessung der Verglasung (1), welche von dieser Zwischenlage (4) verlängert wird, im wesentlichen gleich der erforderlichen Abmessung ist.

8. Verglasung (1) nach Anspruch 7, welche mit einer Zwischenlage (4) versehen ist, **dadurch gekennzeichnet, daß** die am Umfang der Verglasung (1) angebrachte, im großen und ganzen U- oder L-förmige Zwischenlage (4) einen Hohlraum (101) enthält, in dessen Innerem ein Rand der Verglasung (1) eingefügt ist, wobei zwischen dem Rand der Verglasung (1) und dem Boden des Hohlraums (101) ein Zwischenraum (8) frei gelassen wird.

9. Verglasung (1) nach Anspruch 8, welche mit einer Zwischenlage (4) versehen ist, **dadurch gekennzeichnet, daß** der Zwischenraum (8) mit einem Material (23) ausgefüllt ist, das die Zwischenlage (4) an der Verglasung (1) in der gewünschten Position arretiert.

10. Verglasung (1) nach einem der Ansprüche 7 bis 9, welche mit einer Zwischenlage (4) versehen ist, **dadurch gekennzeichnet, daß** das die Zwischenlage (4) bildende Material (23) ein Polyamid ist.

11. Verglasung (1) nach einem der Ansprüche 7 bis 10, welche mit einer Zwischenlage (4) versehen ist, **dadurch gekennzeichnet, daß** das Material (23), welches den Zwischenraum (8) zwischen dem Rand der Verglasung (1) und dem Boden der Zwischenlage (4) ausfüllt, ein wärmeaushärtbares Material wie ein Schmelzklebstoff ist.

## Claims

1. Process for the production of a glazing (1) made from glass and/or a plastics material and equipped with a shim (4) and having the necessary dimensions for installation in a given opening (2), characterized in that it in particular comprises the following stages:
- addition of at least one shim (4) to the glazing (1), the position of the shim (4) being regulated in such a way that the dimension of the glazing (1) extended by said shim (4) is substantially equal to the requisite dimension of the glazing for installation in said opening (2),
- fixing said shim (4) to the glazing (1) in the position where it has been regulated.

2. Process according to claim 1, characterized in that the shim (4) comprises a cavity (101) within which is inserted the edge of the glazing (1), a space (8) having regulatable dimensions being left between the bottom of said cavity (101) and the edge of the glazing (1).

3. Process according to claim 1 or 2, characterized in that the position of the shim (4) is regulated with the aid of a gauge (16, 17, 18) of the sliding calliper type.

4. Process according to one of the preceding claims, characterized in that the shim (4) is fixed to the glazing (1) with the aid of an adhesive material (23).

5. Process according to claim 4, characterized in that the shim (4) is fixed by at least partly filling the space (8) left free between the bottom of the cavity (101) of the shim (4) and the edge of the glazing (1).

6. Process according to claim 5, characterized in that said material (23) is of the heat fusible adhesive type.

7. Glazing (1) made from glass and/or a plastics material provided with a shim (4) and having the necessary dimensions for installation in an opening (2), characterized in that said glazing (1) is provided with at least one shim (4), whose position with respect to the glazing (1) is regulated in such a way that the dimension of the glazing (1) extended by said shim (4) is substantially equal to the requisite dimension.

8. Glazing (1) provided with a shim (4) according to claim 7, characterized in that said shim (4) installed on the periphery of the glazing (1) and having an overall U or L-shape, comprises a cavity (101) within which is inserted an edge of the glazing (1), a space (8) being left between the edge of the glazing (1) and the bottom of said cavity (101).

9. Glazing (1) provided with a shim (4) according to claim 8, characterized in that said space (8) is filled with a material (23) locking the shim (4) in the desired position on the glazing (1).

10. Glazing (1) provided with a shim (4) according to one of the claims 7 to 9, characterized in that the material (23) constituting the shim (4) is of the polyamide type.

11. Glazing (1) provided with a shim (4) according to one of the claims 7 to 10, characterized in that the material (23) filling the space (8) between the edge of the glazing (1) and the bottom of the shim (4) is of a hardenable material of the heat fusible adhesive type.
